# NOUVEAU FASCICULE DE BREVET EUROPEEN

(11) **EP 0 287 437 B2**
(45) Date de publication et mention de la décision concernant l'opposition: **15.03.1995**
(45) Mention de la délivrance du brevet: 22.01.1992
(21) Numéro de dépôt: 88400840.0
(22) Date de dépôt: 07.04.1988
(51) Int. Cl.: A01G 1/06

(54) **Procédé de production de plants de végétaux ligneux ou semi-ligneux pour l'obtention de plants, notamment de vigne**
Herstellungsverfahren für Holz- oder holzartige Pflanzen, insbesondere Weinreben
Production process for wood or semi-wood vegetation plants to obtain plants, especially vines

(30) Priorité: 08.04.1987 FR 8704968
(43) Date de publication de la demande: 19.10.1988
(73) Titulaire: GROUPEMENT CHAMPENOIS D'EXPLOITATION VITICOLE, F-51206 Epernay/Cédex (FR); INSTITUT NATIONAL DE LA RECHERCHE AGRONOMIQUE (INRA), F-75341 Paris Cédéx 07 (FR)
(72) Inventeur: Vesselle, Georges, Bouzy F-51150 Tours Sur Marne (FR); Collas, Alain, F-51360 Verzenay (FR); Brun, Olivier, Athis F-51150 Tours Sur Marne (FR); Martin, Claude, Savouges F-21910 Saulon La Chapelle (FR); Vernoy, Roland, F-21910 Saulon La Chapelle (FR)
(74) Mandataire: Michelet, Alain

(56) Documents cités:
- FR-A- 2 388 485
- FR-A- 2 537 157
- P. A. van de Pol, G. van der Vliet, Rozen stekken en enten in een handeling, Vakblad voor de Bloemisterij, Nr. 26 (1979)
- K. Ohkawa, Cutting-grafts as a Means to Propagate Greenhouse Roses,, Scientia Horticulturae, 13(1980)191-199
- Mémoire d'étudiant, constituant une publication imprimée antérieure 'Die Micropfropfung bei in vitro-Kulturen der Rebe' [Micro-greffage en culture 'In vitro' des ceps de vigne], travail terminé par M. Alwin Dauth au 31.07.1986 à l'Université de Hohenheim, Institut pour la culture fruitière, maraîchère et viticole, Chaire pour la culture viticole, Professeur Docteur G. Alleweldt, Stuttgart-Hohenheim
- "Le Progrès agricole et Viticole", 103e Anneée, N 13-14, 1986, 1-15.07.1986, pages 329-331
- "Die Wein-Wissenschaft", 41ème année, Août 1986, n 4 'Einsatz der in vitro-kultur von Reben zur Produktion von Vorstufenpflanzgut in der Züchtung' [Utilisation de la culture in vitro de ceps de vigne pour la production de précurseurs de plants dans la culture] de Gabriele Brendel, pages 264-270
- "Weinbau", 5ème édition 1977, Verlag Eugen Ulmer Stuttgart, pages 323-362

## Description

La présente invention concerne un procédé de production de plants greffés de végétaux ligneux ou semi-ligneux et plus particulièrement de vigne et les plants obtenus.

Le Phylloxera es:apparu en France en 1866 et a complètement détruit le vignoble en 1914. Sa reconstitution n'a pu être assurée qu'à partir du greffage des cépages français sur des variétés américaines ou des hybrides résistants à l'insecte.Ce greffage consiste à assembler le porte-greffe qui sera enterré et donnera les racines au greffon qui sera la partie aérienne et portera les raisins.

Actuellement, la méthode utilisée est à peu près la même que celle qui a servi à reconstituer le vignoble français . Le greffage s'effectue à la fin de l'hiver sur du matériel aoûté par l'assemblage d'un sarment de porte-greffe américain d'une longueur de 20 à 30 cm à un greffon d'une variété de Vitis vinifera de 4 à 5 cm portant un bourgeon. L'ensemble est ensuite mis en stratification afin de réaliser un cal de soudure au niveau du greffage. 15 à 21 jours après ,les grefféssoudés sont plantés soit sous serre, soit en pleine terre afin de les faire raciner, le bourgeon du greffon démarrant au cours de ces opérations . Cette technique traditionnelle de greffage permet d'obtenir des plants greffés-soudés prêts à être plantés en 6 ou 12 mois, mais avec des pourcentages de réussite assez faibles, de l'ordre de 30-35%.

Le développement de nouvelles technologies, notamment la culture IN VITRO, pour la production des plants de vigne, a conduit à l'étude de nouvelles techniques de greffage.

La multiplication végétative IN VITRO a permis de mettre en oeuvre la méthode dite du greffage en vert Cette technique présente deux inconvénients majeurs :
- le greffage étant réalisé sur un porte-greffe raciné, il faut produire IN VITRO l'ensemble des porte-greffes nécessaires à la production,
- il faut annulerles 7 à 8 yeux de la base du portegreffe dont le développement inhiberait celui du greffon, opération délicate, longue et onéreuse.

FR-A-2.594.629 décrit une machine à greffer en ver ce document a une date de publication postérieure à la date de priorité de la présente invention.

FR-A-2.388.485 décrit et illustre un procédé de multiplication de rosier selon lequel on effectue une greffe en dessous de de la feuille et du bourgeon. Par ce document, on connait les étapes b, f et g de la revendication 1.

La présente invention a pour objet un procédé de production de plants greffés de végétaux ligneux ou semi-ligneux pour l'obtention de plants notamment de vigne visant à obtenir des plants prêts à être plantés en un délai plus bref après le greffage avec un taux de réussite jamais obtenu jusqu'à ce jour et de qualité supérieure.

La technique selon la présente invention est le greffage sur bouture herbacée.

Plus particulièrement, la présente invention propose un procédé de greffage de végétaux ligneux ou semi-ligneux pour l'obtention de plants comprenant en combinaison dans l'ordre indiqué les étapes consistant :
a) à élever en serre ou sous tunnel protecteur au moins un jeune plant de porte-greffe et au moins un jeune plant de greffon issus de la culture IN VITRO pendant une durée suffisante pour obtenir des rameaux herbacés possédant des entre-noeuds suffisamment longs.
b) à prélever sur les plants obtenus selon l'étape a) décrite ci-dessus, des boutures non racinées de porte-greffe et des greffons ;
c)à insérer un greffon comprenant un seul bourgeon sur une bouture de porte-greffe en coupant en deux biseaux l'extrémité inférieure du greffon, en incisant l'extrémité supérieure de la bouture de porte-greffe en son milieu puis en assemblant les deux parties par emboîtement;
d)à introduire ledit ensemble greffé selon c) ci-dessus dans un milieu de développement qui est humidifié avec une solution nutritive;
e)à placer l'ensemble selon d) ci-dessus dans une enceinte à atmosphère saturée d'humidité et à température supérieure à 20°C;
f)à supprimer le bourgeon porté par le porte-greffe ;
g) à élever les plants ainsi formés en serre ou sous tunnel protecteur jusqu'au stade désiré de croissance.

La présente invention concerne également les caractéristiques ci-après considérées isolément ou selon toutes leurs combinaisons techniquement possibles :
- le jeune plant de greffon est une variété de Vitis vinifera ;
- la culture des jeunes plants de porte-greffe et de greffon est effectuée en serre ou sous abri protecteur; deux à trois mois après il est possible de commencer à effectuer des prélèvements ;
- les rameaux herbacés ont des entre-noeuds d'une longueur d'environ 10 ± 2 cm;
- les boutures de porte-greffe sont sectionnées à la partie basale sous un oeil qui est supprimé ;
- les boutures de porte-greffe sont sectionnées dans la partie médiane d'un entre-noeud comportant l'oeil supérieur ainsi que la plus grande partie de l'entre-noeud suivant;
- l'extrémité inférieure du greffon est coupée en deux biseaux ayant un angle de 16 ± 14° tandis que celle supérieure de la bouture de porte-greffe est fendue en son milieu sur une longueur de 5 à 10 mm et les deux parties sont assemblées par emboîtement;
- le milieu de développement de l'ensemble greffé est un cube de laine de roche;
- l'emboîtement du greffon et de la bouture de porte-greffe peut être réalisé par d'autres procédés tels que la greffe anglaise, la greffe oméga, la greffe en fente ou tout autre procédé d'assemblage ;
- le milieu de développement de l'ensemble greffé est un pot contenant un mélange de tourbe et de pouzzolane ou tout autre substrat de culture ;
- la solution nutritive est choisie parmi une solution à base de nitrate de calcium, de nitrate de potasse, de sulfate de magnésie, de nitrate d'ammoniaque, de phosphate bipotassique, de citrate de fer et d'un mélange de plusieurs oligoéléments ;
- l'enceinte est à une température comprise entre 20 et 30°C sous une humidité de 90 à 100%;
- la soudure porte-greffe-greffon correspond à l'émission des racines et apparaît au bout d'environ 10 jours.

Divers avantages et caractéristiques de la présente invention ressortiront de la description détaillée ci-après faite en regard des dessins annexés sur lesquels ;
Figs.1 et 1A illustrent un plant greffé de l'art antérieur selon la méthode traditionnelle;
Figs.2 et 2A illustrent un plant greffé de l'art antérieur issu de la culture IN VITRO obtenu par greffage sur une plante porte-greffe;
Figs.3 et 3A illustrent un plant greffé issu de culture IN VITRO obtenu par greffage sur une bouture porte-greffe selon la présente invention;
Fig.4 illustre les étapes de production d'une bouture porte-greffe;
Fig.5 illustre les étapes de production d'un greffon;
Fig.6 illustre les étapes de production d'un plant greffé selon l'invention à partir de bouture de porte-greffe et d'un greffon.

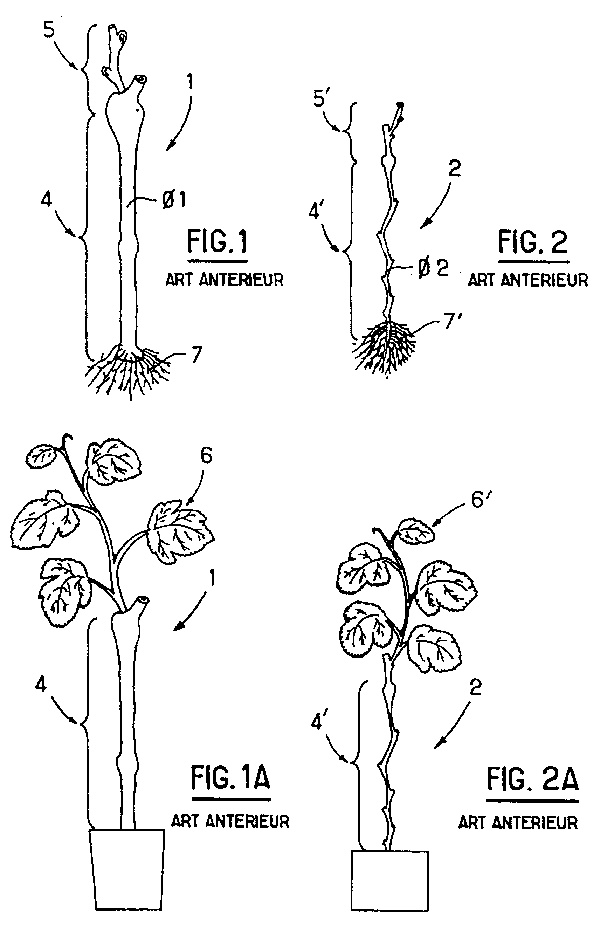

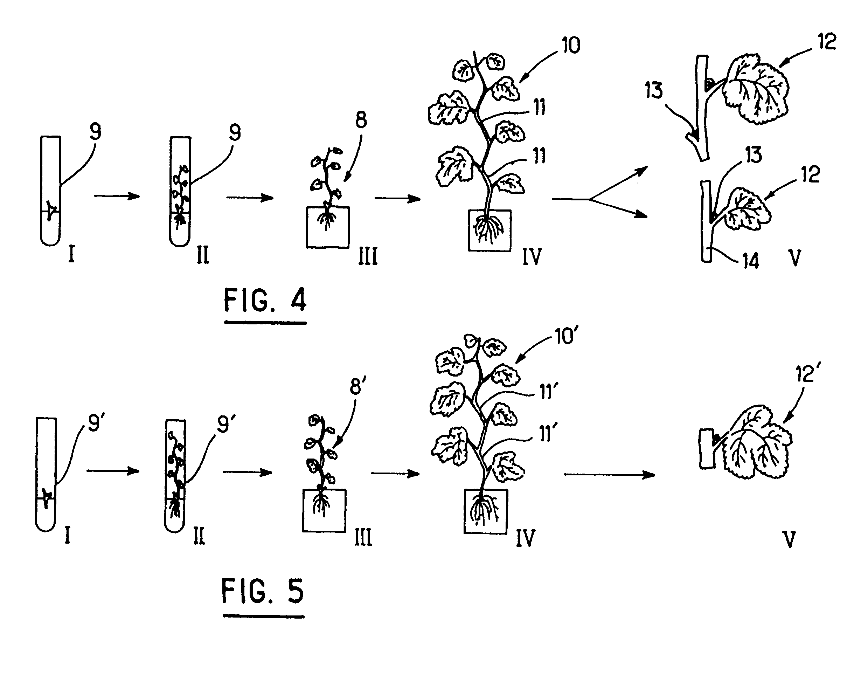

Sur les figures 1 et 1A, le plant traditionnel est désigné par 1, il comprend un porte-greffe 4 et un greffon 5, 7 représentant l'enracinement . La longueur d'un tel plant 1 est comprise entre 25 et 30 cm, son diamètre ⌀₁ est de 6 à 14 mm, son enracinement 7 est peu fourni (seulement quelques racines), la longueur entre-noeud est d'environ 10 cm et la soudure porte-greffe 4 et greffon 5 est grosse souvent avec des parties nécrosées . Le plant selon la figure 1 est un plant en phase de dormance tandis que celui selon la figure 1A est un plant en phase de croissance, les feuilles de greffon portant la référence 6.

Sur les figures 2 et 2A, le plant greffé issu de la culture IN VITRO obtenu par greffage sur plante porte-greffe ou greffage en vert est désigné par 2, il comprend, un porte-greffe 4' et un greffon 5', 7' étant l'enracinement. La longueur d'un tel plant 2 est comprise entre 15 et 30 cm, son diamètre ⌀₂ est de 1,5 à 5 mm, son enracinement 7' est chevelu et important, la longueur entre-noeud est très variable et sensiblement de 2 à 5 cm et la soudure porte-greffe 4'-greffon 5' est une simple boursoufflure. Le plant selon la figure 2 est un plant en phase de dormance tandis que celui selon la figure 2A est un plant en phase de croissance, les feuilles du greffon portant la référence 6'.

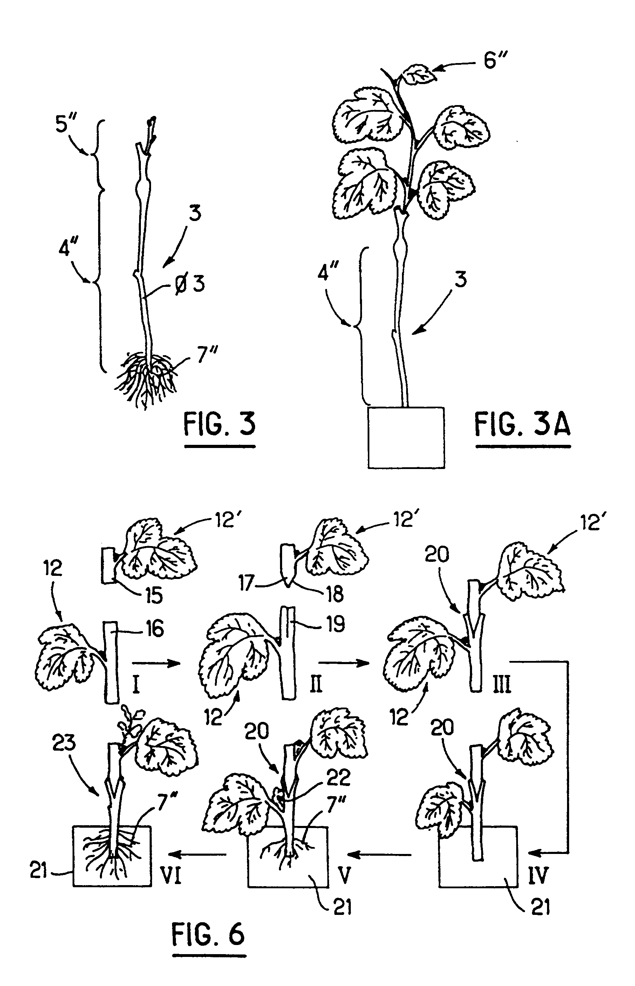

Sur les figures 3 et 3A, le plant greffé de l'invention issu de culture IN VITRO obtenu par greffage sur bouture porte-greffe est désigné par 3. Il comprend un porte-greffe 4'' et un greffon 5'' 7'' étant l'enracinement. La longueur du plant 3 est comprise entre 15 et 30 cm, son diamètre ⌀₃ est de 3 à 5 mm, son enracinement 7'' est chevelu et important, la longueur entre-noeud est comprise entre 10 ± 2 cm, la soudure porte-greffe 4''-greffon 5'' est à terme assimilée à la plante. Le plant selon la figure 3 est un plant en phase de dormance tandis que le plant selon la figure 3A est un plant en phase de croissance, 6'' illustrant les feuilles du greffon.

Les figures 4 et 5 montrent respectivement les diverses étapes pour l'obtention de bouture de porte-greffe 12 et de greffon 12'. Les stades I et II sur ces figures correspondent à la culture IN VITRO 9,9' pour l'obtention de jeunes plants de porte-greffe et de greffon. Les jeunes plants de porte-greffe 8 et de greffon 8' sont schématisés dans l'étape III. Ils ont été élevés en serre ou sous tunnel protecteur quand les conditions de température le permettent. A partir de 2 à 3 mois, on obtient ainsi des rameaux herbacés de porte-greffe 10 et des rameaux herbacés de greffon 10' selon l'étape IV possédant des entre-noeuds respectivement 11, 11' d'une longueur voisine de 10 ± 2 cm . On prélève alors sur les plants de porte-greffe selon l'étape IV des boutures porte-greffe 12 dont la partie basale est sectionnée soit juste sous un oeil 13 soit dans la partie médiane 14 d'un entre-noeud 11 et qui comporte l'oeil supérieur 13 ainsi que la plus grande partie de l'entre-noeud suivant 11. La bouture porte-greffe 12 ainsi récoltée comprend tout ou partie d'un entre-noeud 11, un noeud intermédiaire avec sa feuille et son prompt-bourgeon et tout ou partie de l'entre-noeud supérieur. On prélève en même temps sur les plants de greffons selon l'étape IV de la figure 5 des greffons 12' à un seul bourgeon.

La réussite de l'opération bouture-greffe ou greffe-bouture est conditionnée par le maintien tant sur le porte-greffe 4'' que le greffon 5'' de tout ou partie de la feuille qu'il porte respectivement: lorsque celle-ci est trop importante, elle peut être réduite d'un tiers en surface.

La base 15 du greffon 12' est assemblée à la partie supérieure 16 de la bouture porte-greffe 12 soit par un greffage manuel soit par un greffage mécanique. Quel que soit le mode utilisé, le principe de greffage est le même: l'extrémité 15 du greffon 12' est coupée en deux biseaux 17, 18 ayant un angle de 16 ± 4° alors que celle de la bouture porte-greffe 12 est fendue en 19 en son milieu sur une longueur de 5 à 10 mm. Ces deux étapes sont illustrées sur la figure 6 par I et II. Selon l'étape III de la figure 6, les deux parties 12, 12' sont alors assemblées par emboîtement 20. La base de cet ensemble est alors introduite comme indiqué dans l'étape IV sur la figure 6 dans un milieu de développement 21. Ce milieu de développement 21 est constitué soit par un cube de laine de roche soit par un pot contenant un mélange de tourbe et de pouzzolane ou tout autre substrat; l'un ou l'autre est humidifié avec une solution nutritive puis placé dans une enceinte à atmosphère saturée d'humidité d'environ 90 à 100% et ayant une température de 20 à 30°C. Diverses solutions peuvent être utilisées comme par exemple une solution à base de nitrate de calcium, de nitrate de potasse, de sulfate de magnésie, de nitrate d'ammoniaque, de phosphate bipotassique, de citrate de fer et un mélange de plusieurs oligo-éléments . La soudure porte-greffe-greffon comme illustrée dans les étapes V et VI sur la figure 6 et l'émission de racines 7'' sont obtenues simultanément en une dizaine de jours, moment partir à duquel il est très aisé de supprimer le bourgeon 22 porté par le porte-greffe 12 afin que son développement ne se fasse pas au détriment du greffon 12'. Les plants 23 sont alors élevés soit en serre soit sous tunnel protecteur . Il est ainsi possible d'obtenir des plants prêts à être plantés au vignoble sept semaines après le greffage avec un taux de réussite de 85 ± 5%.

La présente invention est décrite à propos du greffage de plants de vigne mais elle s'applique aussi au greffage de tous les autres plants qui ne sont pas des plants de vigne mais qui nécessitent un greffage.

Le matériel herbacé 10, 10' issu de culture IN VITRO 9, 9' présente un certain nombre de caractéristiques originales qui assurent la bonne réussite de la bouture-greffe ou greffe-bouture. Il présente une aptitude à la rhizogénèse exceptionnelle très largement supérieure à celle de jeunes pousses herbacées prélevées sur une plante élevée dans les conditions naturelles. Ceci est vrai pour la vigne mais aussi pour le pêcher amandier GF 677, le rosier etc. Cette caractéristique est particulièrement spectaculaire pour le pêcher-amandier dont on connait les faibles potentialités d'enracinement par les techniques traditionnelles de multiplication végétative (bouturage, marcottage); à partir du matériel issu de cultures IN VITRO, on obtient un enracinement des jeunes boutures à plus de 90% pour cette plante, l'opération peut être répétée plusieurs fois après la sortie de tube avant que l'aptitude à la rhizogénèse ne diminue.

Par ailleurs, la qualité de la soudure de produits issus d'IN VITRO entre le porte-greffe 4'' et le greffon 5'' dépend beaucoup de l'âge physiologique des deux partenaires et de leur état sanitaire . En ce qui concerne l'âge phsiologique, il est incontestable que la microplante issue de culture in vitro est un matériel original dont les caractéristiques se rapprochent beaucoup de celui provenant de la germination de graines: tous deux possèdent des assises génératrices (cambiums ) en cours d'édification qui ne commandent pas encore au plan moléculaire toutes les fonctions qui seront celles de la plante adulte.Grâce à la culture IN VITRO, on possède du matériel biologique en port-greffe et en greffon qui est au même âge physiologique et plus précisément qui présente les caractéristiques des plantes juvéniles: les deux partenaires ont donc plus de possibilité ou moins de restriction à s'amalgamer et à permettre une soudure rapide et partaite qui assure une excellente connexion entre les vaisseaux du port-greffe 4" et ceux du greffon 5''. Il importe de noter que lorsque les plantes issues de culture IN VITRO ont mis en place les processus moléculaires qui conduisent à une synthèse abondante de composés phénoliques ce qui est aisément repérable par l'oxydation de la base des boutures sectionnées par la partie médiane d'un entre-noeud 11, la réussite de l'opération bouture-greffe diminue considérablement, c'est-à-dire de 30 à 40%. Il est possible de retarder cette évolution biochimique des jeunes plants de vigne en les maintenant à une température constamment supérieure à 20°C plus particulièrement entre 20 et 30°C.

On comprend aisément l'intérêt du procédé de la présente invention: tout d'abord un intérêt économique puisqu'il est possible d'obtenir très rapidement un très grand nombre de plants pouvant être implantés au vignoble. Dans le cas de greffage traditionnel, à partir d'une bouture de porte-greffe et d'un greffon, on obtient 0,35 plant en six ou douze mois Avec le greffage en vert, à partir d'une bouture de porte-greffe et d'une bouture de greffon, on obtient 0,80 plant en 10 semaines. Par contre, avec le procédé selon la présente invention de la bouture-greffe ou greffe-bouture herbacée, il est possible d'obtenir à partir d'un plant de porte-greffe et d'un plant de greffon, quatre boutures de porte-greffe et quatre greffons toutes les quatre semaines ,ce qui donne 3,2 plants en sept semaines. Un intérêt qualitatif ensuite puisque le greffage est réalisé dans une phase herbacée avec des cellules jeunes ayant un fort potentiel de multiplication . Tous ces facteurs permettent d'avoir une soudure parfaite sans nécrose, comme cela est le cas avec un greffage traditionnel.

En ce qui concerne l'influence de l'état sanitaire sur la réussite de l'opération, il est aussi à noter que la culture de méristèmes introduit un facteur positif supplémentaire per rapport à la thermothérapie . La culture de méristèmes permet en effet d'éliminer des virus encore inconnus car peu pathogènes, virus qui ne sont pas détruits par la thermothérapie même lorsque celle-ci est associée à la culture d'apex. Or, la multiplication de ces virus apparemment discrets n'est pas totalement sans incidence sur le développement de la plante, ceci est d'autant plus vrai quand on associe, comme c'est le cas dans le greffage, deux partenaires: l'un des deux peut héberger un virus très peu pathogène pour lui mais qui perturbe plus profondément le métabolisme de l'autre d'où la possibilité de l'apparition d'une incompatibilité porte-greffe-greffon plus ou moins grave. Le procédé selon la présente invention doit permettre de limiter ce phénomène.

Le procédé de l'invention de bouture-greffe ou greffe-bouture herbacée s'adapte à tous les végétaux ligneux ou semi-ligneux dont la production nécessite un greffage.

Le produit obtenu par le procédé selon la présente invention est très caractéristique de par son diamètre qui, pour la vigne,est pris dans la gamme de 3 à 5 mm et en ce que la longueur entre-noeud est pour la vigne d'environ 10 à ±2 cm et que la soudure est à terme assimilée à la plante comme illustré sur la figure 3 où l'on constate que la soudure porte-greffe 4'' greffon 5'' est harmonieuse.

Il convient de noter qu'à titre d'exemple dans l'étape g), les plants 23 sont élevés en serre ou sous tunnel protecteur pendant environ sept semaines . La culture en serre ou sous abri protecteur des jeunes plants de porte-greffe et de greffon (8, 8') assure l'obtention de boutures de porte-greffe et des greffons durant une période qui peut se poursuivre jusqu'à ce que les conditions de développement ne soient plus favorables.

Le dépistage des maladies de type viral, dont les agents pathogènes ne sont pas encore caractérisés, est réalisé par l'indéxage sur des variétés indicatrices.

Le système classique de production de greffes soudés en pépinière avec transplantation au vignoble, ne permet pas d'obtenir un jugement définitif avant trois ans.

Des techniques modernes par indéxage en vert, ou IN VITRO sur des axes hypocotyles de semis non racinés ont permis de ramener ce délai à quelques semaines après le greffage.

La présente invention permet le même délai de réponse que les techniques modernes vis-à-vis de ces maladies, mais offre l'avantage d'être plus simple et plus fiable, donc plus économique.

## Revendications

1. Procédé de production de plants greffés de végétaux ligneux ou semi-ligneux pour l'obtention de plants comprenant en combinaison, dans l'ordre indiqué, les étapes consistant:
a) à élever en serre ou sous tunnel protecteur au moins un jeune plant de porte-greffe (9) et au moins un jeune plant de greffon (9') issus de la culture IN VITRO pendant une durée suffisante pour obtenir des rameaux herbacés (8,8') possédant des entre-noeuds (11, 11') ,suffisamment longs;
b)à prélever sur les plants (10, 10') obtenus selon l'étape a) ci-dessus des boutures non racinées de porte-greffe (12) et des greffons (12'),
c)à insérer un greffon (12') comprenant un seul bourgeon sur une bouture de porte-greffe (12) en coupant en deux biseaux (17, 18) l'extrémité inférieure (15) du greffon (12'), en incisant l'extrémité supérieure de la bouture de porte-greffe (12) en son milieu (19), puis en assemblant les deux parties (12, 12') par emboîtement (20),
d) à introduire ledit ensemble greffé selon c) ci-dessus dans un milieu de développement (21) qui est humidifié avec une solution nutritive;
e)à placer l'ensemble selon d) ci-dessus dans une enceinte à atmosphère saturée d'humidité et à température supérieure à 20°C;
f) à supprimer le bourgeon (22) porté par le porte-greffe (12),
g) à élever les plants ainsi formées (23) en serre ou sous tunnel protecteur jusqu'au stade désiré de croissance .

2. Procédé selon la revendication 1 caractérisé en ce que le jeune plant de greffon (8') est une variété de Vitis vinifera.

3. Procédé selon l'une des revendications 1 ou 2, caractérisé en ce que les entre-noeuds (11, 11') des rameaux herbacés (10, 10') ont une longueur d'environ 10 ± 2 cm.

4. Procédé selon l'une quelconque des revendications 1 à 3, caractérisé en ce que les boutures de porte-greffe (12) sont sectionnées à la partie basale sous un oeil (13).

5. Procédé selon l'une quelconque des revendications 1 à 3, caractérisé en ce que les boutures de porte-greffe (12) sont sectionnées dans la partie médiane (14) d'un entre-noeud (11) comportant l'oeil supérieur (13) ainsi que la plus grande partie de l'entre-noeud (11) suivant.

6. Procédé selon l'une quelconque des revendications 1 à 5, caractérisé en ce que l'extrémité inférieure (15) du greffon (12') est coupée en deux biseaux (17, 18) ayant un angle de 16 ± 4° tandis que celle supérieure de la bouture porte-greffe (12) est fendue en son milieu (19) sur une longueur de 5 à 10 mm et les deux boutures (12, 12') sont assemblées par emboîtement (20).

7. Procédé selon l'une quelconque des revendications 1 à 5, caractérisé en ce que l'opération d'incision peut être choisie parmi un groupe d'opération d'incision telle que greffe anglaise, greffe en oméga, greffe en fente ou tout autre procédé d'assemblage.

8. Procédé selon l'une quelconque des revendications 1 à 6, caractérisé en ce que le milieu de développement (21) de l'ensemble greffé est un cube de laine de roche.

9. Procédé selon l'une quelconque des revendications 1 à 6, caractérisé en ce que le milieu de développement (21) de l'ensemble greffé est un pot contenant un mélange de tourbe et de pouzzolane ou tout autre substrat de culture.

10. Procédé selon l'une quelconque des revendications 1 à 8, caractérisé en ce que la solution de matière nutritive est choisie parmi une solution à base de nitrate de calcium, de nitrate de potasse, de sulfate de magnésie, de nitrate d'ammoniaque, et phosphate bipotassique, de citrate de fer et d'un mélange de plusieurs oligo-éléments.

11. Procédé selon l'une quelconque des revendications 1 à 9, caractérisé en ce que l'enceinte est à une température comprise entre 20 et 30° C sous une humidité de 90 à 100 %.

## Claims

1. Method for the production of grafted saplings of ligneous or semi-ligneous plants in order to obtain saplings, comprising a combination in the mentioned order of the steps consisting of :
a) growing at least one young stock sapling (9) and at least one young scion sapling (9'), both derived from IN VITRO culture in the greenhouse or under a polyethylene tunnel for a period long enough to obtain herbaceous branches (8, 8') with internodes (11, 11') of sufficient length,
b) taking cuttings without roots of stock (12) and scions (12') on the saplings (10, 10') obtained in step a) above,
c) inserting a scion (12') having a single bud into a stock cutting (12) by bevelling the lower end (15) of the scion (12') from two sides (17, 18) by slitting the upper end of the stock cutting (12) in the middle (19) and then by assembling the two parts (12, 12') by joining (20),
d) transferring said grafted unit according to c) above into a development medium (21) which is moistened with a nutrient solution,
e) placing the unit according to d) above into a container having a water-saturated atmosphere, at a temperature above 20°C,
f) suppressing the bud (22) on the stock (12),
g) growing the so obtained saplings (23) in the greenhouse or under a polyethylene tunnel until they have reached the desired stage of growth.

2. Method according to claim 1, characterized in that the young scion sapling (8') is a variety of Vitis vinifera.

3. Method according to claims 1 or 2, characterized in that the internodes (11, 11') of the herbaceous branches (10, 10') have a length of approximately 10 ± 2 cm.

4. Method according to any one of claims 1 to 3, characterized in that the stock cuttings (12) are cut at the lower part beneath an eye (13).

5. Method according to any one of claims 1 to 3, characterized in that the stock cuttings (12) are cut at the middle part (14) of an internode (11), including the upper eye (13) and also the major part of the following internode (11).

6. Method according to any one of claims 1 to 5, characterized in that the lower end (15) of the scion (12') is bevelled from two sides (17, 18) at an angle of 16 ± 4°, while the upper end of the stock cutting (12) is split in its middle (19) over a length of 5 to 10 mm, and the two cuttings (12, 12') are assembled by joining (20).

7. Method according to any one of claims 1 to 5, characterized in that the operation of slitting can be chosen among a group of operations of slitting, such as saddle grafting, omega grafting, splice grafting, or any other proces of assembly.

8. Method according to any one of claims 1 to 6, characterized in that the nutrient solution (21) of the grafted unit is a cube of rock wool.

9. Method according to any one of claims 1 to 6, characterized in that the development medium (21) of the grafted unit is a pot containing a mixture of peat and pozzolana, or any other culture substrate.

10. Method according to any one of claims 1 to 8, characterized in that the nutrient solution is chosen from a solution based on calcium nitrate, on potassium nitrate, on magnesium sulphate, on ammonium nitrate, on potassium hydrogen phosphate, on iron citrate and on a mixture of several trace elements.

11. Method according to any one of claims 1 to 9, characterized in that the container is at a temperature in the range from 20 to 30°C and at a humidity of 90 to 100 %.

## Patentansprüche

1. Verfahren zur Herstellung von Setzlingen, die mit Holz- oder holzartigen Pflanzen veredelt sind, um Setzlinge zu erhalten, umfassend in Kombination in der angegebenen Reihenfolge die Scshritte,
a) in einem Treibhaus oder unter einem Schutzzelt wenigstens ein junger Setzling als Veredelungsunterlage (9) und wenigstens ein junger Setzling als Pfropfzweig (9'), über eine genügend lange Zeit einer in-vitro-Kultur entsprossen, aufgezogen wird, um grasartige Zweige (8,8') zu erhalten, die genügend lange Internodien (11,11') besitzen;
b) von den gemäß obigem Schritt a) erhaltenen Setzlingen (10,10')wurzellose Stecklinge als Veredelungsubterlage (12) und als Pfropfzweig (12') abgenommen werden;
c) ein Pfropfzweig (12'), umfassend eine einzige Knospe auf einem Steckling als Veredelungsunterlage (12), eingesetzt wird durch Schneiden zweier Schrägflächen (17,18) am unteren Ende (15) des Pfropfzweiges (12'), Einschneiden des Stecklings als Veredelungsgrundlage (12) in der Mitte (19) des oberen Endes, dann Zusammenfügen der beiden Teile (12,12') durch Einstecken (20);
d) dieses gemäß c) oben gepfropfte Gebilde in ein Wachstumsmedium (21) eingebracht wird, das mit einer Nährlösung befeuchtet ist;
e) dieses Gebilde gemäß d) oben in einen geschlossenen Raum mit einer feuchtigkeitsgesättigten Atmosphäre und einer Temperatur von über 20°C verbracht wird;
f) die Knospe (22) auf der Veredelungsunterlage (12) beseitigt wird; und
g) die so gebildeten Setzlinge (23) in einem Treibhaus oder unter einem Schutzzelt bis zum gewünschten Wachstumsstadium aufgezogen werden.

2. Verfahren nach Anspruch 1, dadurch gekennzeichnet, daß der junge Pfropfzweigsetzling (8') eine Abart von Vitis vinifera ist.

3. Verfahren nach einem der Ansprüche 1 oder 2, dadurch gekennzeichnet, daß die Internodien (11,11') der grasartigen Zweige (10,10') eine Länge von etwa 10 ± 2 cm haben.

4. Verfahren nach irgendeinem der Ansprüche 1 bis 3, dadurch gekennzeichnet, daß die Setzlinge als Veredelungsgrundlage (12) am Basisteil unter einem Auge (13) durchschnitten werden.

5. Verfahren nach irgendeinem der Ansprüche 1 bis 3, dadurch gekennzeichnet, daß die Setzlinge als Veredelungsgrundlage (12) am mittleren Teil (14) eines Internodiums (11), das das obere Auge (13) sowie den größeren Teil des nächsten Internodiums (11) umfaßt, durchschnitten werden.

6. Verfahren nach irgendeinem der Ansprüche 1 bis 5, dadurch gekennzeichnet, daß das untere Ende (15) des Pfropfzweiges (12') zu zwei Schrägflächen (17,18) geschnitten wird, die einen Winkel von 16 ± 4° bilden, während das obere Ende des Setzlings als Veredelungsunterlage (12) in der Mitte (19) auf einer Länge von 5 bis 10 mm gespalten wird, und die beiden Setzlinge (12,12') durch Einstecken (20) zusammengefügt werden.

7. Verfahren nach irgendeinem der Ansprüche 1 bis 5, dadurch gekennzeichnet, daß die Schnittoperation ausgewählt werden kann aus einer Gruppe von Schnittoperationen wie etwa Schäften, Omega-Pfropfen, Spaltpfropfen oder ganz anderen Methoden des Zusammenfügens.

8. Verfahren nach irgendeinem der Ansprüche 1 bis 6, dadurch gekennzeichnet, daß das Wachstumsmedium (21) des gepfropften Gebildes ein Würfel aus Steinwolle ist.

9. Verfahren nach irgendeinem der Ansprüche 1 bis 6, dadurch gekennzeichnet, daß das Wachstumsmedium (21) des gepfropften Gebildes ein Topf mit einer Mischung aus Torf und Puzzolanerde oder einem ganz anderen Kultursubstrat ist.

10. Verfahren nach irgendeinem der Ansprüche 1 bis 8, dadurch gekennzeichnet, daß die Nährstofflösung ausgewählt ist aus einer Lösung auf der Basis von Calciumnitrat, Kaliumnitrat, Magnesiumsulfat, Ammoniumnitrat, Dikaliumphosphat, Eisencitrat und einer Mischung weiterer Spurenelemente.

11. Verfahren nach irgendeinem der Ansprüche 1 bis 9, dadurch gekennzeichnet, daß der geschlossene Raum eine Temperatur von zwischen 20 und 30°C und eine Luftfeuchtigkeit von 90 bis 100% aufweist.
